# EUROPÄISCHE PATENTSCHRIFT

(11) **EP 3 195 440 B1**
(45) Veröffentlichungstag und Bekanntmachung des Hinweises auf die Patenterteilung: **25.12.2019**
(21) Anmeldenummer: 14802333.6
(22) Anmeldetag: 06.11.2014
(51) Int. Cl.: H02J 3/36

(54) **VERFAHREN ZUM ÜBERTRAGEN ELEKTRISCHER ENERGIE ZWISCHEN EINEM WECHSELSTROMNETZ UND EINEM GLEICHSTROMNETZ**
METHOD FOR TRANSMITTING ELECTRIC ENERGY BETWEEN AN AC GRID AND A DC GRID
PROCEDE DE TRANSMISSION D'ÉNERGIE ÉLECTRIQUE ENTRE UN RÉSEAU À COURANT ALTERNATIF ET UN RÉSEAU À COURANT CONTINUE

(43) Veröffentlichungstag der Anmeldung: 26.07.2017
(73) Patentinhaber: Siemens Aktiengesellschaft, 80333 München (DE)
(72) Erfinder: ECKEL, Hans-Günter, 18059 Rostock (DE); KNAAK, Hans-Joachim, 91054 Erlangen (DE)
(86) Internationale Anmeldenummer: PCT/EP2014/073903
(87) Internationale Veröffentlichungsnummer: WO 2016/070922

(56) Entgegenhaltungen:
- WO-A1-2010/069371
- WO-A1-2014/131454
- WO-A1-2014/131456
- US-A1- 2014 268 926

## Beschreibung

Die Erfindung betrifft ein Verfahren zum Übertragen elektrischer Energie zwischen einem Wechselstromnetz und einem Gleichstromnetz, bei dem aus einer ersten Spannung eines dieser beiden Stromnetze mithilfe einer Umrichtereinheit eine zweite Spannung erzeugt wird, die in das andere der beiden Stromnetze eingespeist wird.

Solch ein Verfahren findet beispielsweise bei der sogenannten Hochspannungs-Gleichstrom-Übertragung (HGÜ) Anwendung. Dabei wird - um elektrische Energie über eine lange Übertragungsstrecke hinweg ökonomisch übertragen zu können - aus einer kraftwerksseitig erzeugten Wechselspannung mithilfe einer Umrichtereinheit eine Gleichspannung erzeugt, die in ein Gleichstromnetz, im einfachsten Fall in eine Gleichstromleitung, eingespeist wird. Zum Erzielen einer hohen Leistungsdichte verbunden mit einem guten Kosten-LeistungsVerhältnis werden Umrichtereinheiten beispielsweise mit einer Vielzahl von Diodengleichrichtern ausgestattet.

Ein bekanntes Problem bei einem solchen Verfahren ist, dass die zweite Spannung, die mithilfe der Umrichtereinheit erzeugt wird, an die erste Spannung gekoppelt ist. Folglich kann eine zeitliche Schwankung der ersten Spannung eine zeitliche Schwankung der zweiten Spannung herbeiführen, was wiederum bei zahlreichen Anwendungen zu Problemen führen kann, die hohe Kosten verursachen. Wird die zweite Spannung z.B. zur Versorgung eines elektrischen Verbrauchers verwendet, kann eine Schwankung der zweiten Spannung darin resultieren, dass der elektrische Verbraucher nicht ordnungsgemäß betrieben wird oder sogar beschädigt wird.

Aus der Patentanmeldung US 2014/0268926 A1 ist eine Hochspannungs-Gleichstrom-Übertragungsstation bekannt, die einen netzgeführten Stromrichter und einen DC-DC-Wandler in einer Reihenschaltung aufweist. Der netzgeführte Stromrichter und der DC-DC-Wandler werden von einem Stromversorgungsnetz gespeist.

Die Patentanmeldung WO 2010/069371 A1 offenbart eine Anlage zur Hochspannungs-Gleichstrom-Übertragung. Jede Station dieser Anlage weist einen netzgeführten Stromrichter und einen Voltage Source Converter auf, die elektrisch in Reihe geschaltet werden können.

Die Schrift WO 2014/131456 A1 offenbart eine Umrichterstation mit einem Diodengleichrichter für den Netzanschluss eines Offshore-Windparks.

Eine Aufgabe der Erfindung ist, ein günstiges Verfahren anzugeben, mit dem Spannungsschwankungen vermindert werden können.

Diese Aufgabe wird erfindungsgemäß gelöst durch ein Verfahren nach dem Patentanspruch 1.

Dabei ist vorgesehen, dass die Umrichtereinheit einen Diodengleichrichter sowie einen steuerbaren Umrichter umfasst, die zweite Spannung sich aus einer Überlagerung einer ersten Teilspannung, die vom Diodengleichrichter erzeugt wird, und einer zweiten Teilspannung, die vom steuerbaren Umrichter erzeugt wird, ergibt und die zweite Teilspannung vom steuerbaren Umrichter derart eingestellt wird, dass ein Verhältnis einer Kenngröße der zweiten Spannung zu einer Kenngröße der ersten Spannung verändert wird.

Die Erfindung geht von der Überlegung aus, dass mit einem Verändern des Verhältnisses der beiden Kenngrößen, welches durch das Einstellen der zweiten Teilspannung bewirkt wird, eine zumindest teilweise Entkopplung der zweiten Spannung von der ersten Spannung erreicht werden kann. Folglich können zeitliche Schwankungen der zweiten Spannung, die auf zeitliche Schwankungen der ersten Spannung zurückgehen, durch das Verändern des Verhältnisses der beiden Kenngrößen reduziert oder sogar vermieden werden. Dadurch können wiederum Kosten, die durch einen nicht ordnungsgemäßen Betrieb eines elektrischen Verbrauchers oder durch Schäden am Verbraucher verursacht werden, reduziert werden.

Weiter geht die Erfindung von der Überlegung aus, dass für zahlreiche Anwendungen eine Umrichtereinheit mit mehreren Umrichtern benötigt wird, die jeweils eine Teilspannung erzeugen, damit die Umrichtereinheit aus einer Überlagerung der Teilspannungen ausgangsseitig eine Spannung erzeugen kann, die eine hinreichend große Kenngröße für die jeweilige Anwendung aufweist. Dabei kann eine Anzahl der Umrichter, die benötigt werden, um ausgangsseitig eine Spannung mit einer hinreichend großen Kenngröße zu erzeugen, von einer Ausgestaltung der jeweiligen Umrichter abhängen.

Die Erfindung sieht vor, dass die Umrichtereinheit einen Diodengleichrichter sowie einen steuerbaren Umrichter umfasst. Der Diodengleichrichter erzeugt eine erste Teilspannung, deren Kenngröße in einem vorgegebenen Verhältnis zur Kenngröße der ersten Spannung steht. Der steuerbare Umrichter hingegen erzeugt eine zweite Teilspannung, deren Kenngröße variabel bzw. einstellbar bezüglich der Kenngröße der ersten Spannung ist.

Durch eine Überlagerung der ersten und der zweiten Teilspannung kann die Umrichtereinheit ausgangsseitig eine Spannung erzeugen, deren Kenngröße in einem Intervall einer vorgegebenen Breite um einen vorgegeben Kenngrößenwert herum einstellbar ist. Die Breite des Intervalls kann unter anderem durch eine Ausgestaltung des steuerbaren Umrichters vorgegeben sein. Der vorgegebene Kenngrößenwert hingegen kann unter anderem durch eine Ausgestaltung des Diodengleichrichters vorgegeben sein. Eine solche Einstellbarkeit der ausgangsseitigen Spannung, d.h. der zweiten Spannung, ist für zahlreiche Anwendungen ausreichend.

Ein Vorteil einer Umrichtereinheit, die einen Diodengleichrichter und einen steuerbaren Umrichter umfasst, ist, dass sie kostengünstiger realisiert werden kann als eine Umrichtereinheit, die nur steuerbare Umrichter umfasst. Denn Diodengleichrichter sind typischerweise kostengünstiger als steuerbare Umrichter. Außerdem ist eine kompaktere und/oder leichtere Ausgestaltung einer solchen Umrichtereinheit mit einem Diodengleichrichter und einem steuerbaren Umrichter möglich, da sie verglichen mit einer Umrichtereinheit, die nur steuerbare Umrichter umfasst, weniger Steuerelemente aufweisen kann. Ferner ermöglicht der Diodengleichrichter einen energieeffizienteren Betrieb der Umrichtereinheit, da die Diodengleichrichter während ihres Betriebs typischerweise eine geringere Verlustleistung aufweisen als steuerbare Umrichter.

Unter einer Umrichtereinheit kann vorliegend eine Einheit aufgefasst werden, die einen als Gleich- und/oder Wechselrichter betreibbaren Stromrichter oder ein als Gleich-und/oder Wechselrichter betreibbares System aus mehreren Stromrichtern umfasst.

An dieser Stelle sei erwähnt, dass die zuvor erwähnte Umrichtereinheit grundsätzlich mehr als einen Diodengleichrichter und/oder mehr als einen steuerbaren Umrichter aufweisen kann.

Als steuerbarer Umrichter kann ein Stromrichter aufgefasst werden, der - im Gegensatz zu einem Diodengleichrichter - ein steuerbares Bauteil umfasst. Das steuerbare Bauteil kann insbesondere ein steuerbarer Leistungshalbleiter, wie z.B. ein Thyristor oder ein Bipolartransistor mit isolierter Gate-Elektrode sein. Weiterhin kann der steuerbare Umrichter neben dem steuerbaren Bauteil auch eine oder mehrere Dioden umfassen.

Nachfolgend wird der Einfachheit halber anstelle der Bezeichnung "Bipolartransistor mit isolierter Gate-Elektrode" die Abkürzung "IGBT" verwendet - abgeleitet von der englischen Bezeichnung "insulated-gate bipolar transistor".

Die zweite Spannung kann eine Überlagerung aus der ersten Teilspannung und der zweiten Teilspannung sein. Ferner kann die zweite Spannung eine Überlagerung aus der ersten Teilspannung, der zweiten Teilspannung sowie einer oder mehrerer weiterer Teilspannungen sein. Sinnvollerweise wird eine solche weitere Teilspannung von einem weiteren Bauteil erzeugt.

Zweckmäßigerweise wird die zweite Teilspannung durch ein Ansteuern eines steuerbaren Bauteils des steuerbaren Umrichters derart eingestellt, dass ein Verhältnis einer Kenngröße der zweiten Spannung zu einer Kenngröße der ersten Spannung verändert wird.

Das Einstellen der zweiten Teilspannung durch den steuerbaren Umrichter kann insbesondere ein Verändern der zweiten Teilspannung umfassen.

Grundsätzlich ist es möglich, dass das Verhältnis der Kenngröße der zweiten Spannung zur Kenngröße der ersten Spannung dynamisch verändert wird. Dabei kann das Verhältnis der Kenngröße der zweiten Spannung zur Kenngröße der ersten Spannung verändert werden, falls die Kenngröße der ersten Spannung gegenüber einem Sollwert abweicht. Außerdem kann das Verhältnis über diejenige Dauer hinweg verändert bleiben, während welcher die Kenngröße der ersten Spannung gegenüber dem Sollwert abweicht. Nach Ablauf dieser Dauer kann das Verhältnis wieder auf seinen ursprünglichen Wert eingestellt werden.

Darüber hinaus ist es möglich, dass das Verhältnis der Kenngröße der zweiten Spannung zur Kenngröße der ersten Spannung stationär verändert wird. Die Veränderung des Verhältnisses kann dabei unabhängig davon, ob die Kenngröße der ersten Spannung gegenüber einem Sollwert abweicht, erfolgen.

Das oben beschriebene Verfahren kann insbesondere im Bereich einer Hochspannungs-Gleichstrom-Übertragung Anwendung finden, insbesondere bei einer Drehstrom-Gleichspannungs-Wandlung. Zweckmäßigerweise ist die erste Spannung eine Wechselspannung, insbesondere eine dreiphasige Wechselspannung. Das Wechselstromnetz kann also insbesondere ein dreiphasiges Wechselstromnetz sein. Weiter ist es zweckmäßig, wenn die zweite Spannung eine Gleichspannung ist.

Die Gleichspannung kann eine gleichgerichtete Spannung sein. Ferner kann die Gleichspannung einen Oberschwingungsanteil aufweisen. Als Oberschwingung kann eine solche Schwingung aufgefasst werden, deren Frequenz ein ganzzahliges Vielfaches einer Grundfrequenz einer Wechselspannung ist, die von der Umrichtereinheit bereitgestellt wird oder mit der die Umrichtereinheit versorgt wird. Als Oberschwingung kann insbesondere eine solche Schwingung aufgefasst werden, deren Frequenz ein ganzzahliges Vielfaches einer Grundfrequenz der ersten Spannung ist.

In bevorzugter Weise ist die Kenngröße der ersten Spannung ein Betrag der ersten Spannung. Weiter ist es bevorzugt, wenn die Kenngröße der zweiten Spannung ein Betrag der zweiten Spannung ist. Im Falle einer Wechselspannung kann der Betrag insbesondere ein Betrag einer Amplitude einer Grundschwingung dieser Wechselspannung sein.

Alternativ kann die Kenngröße der ersten Spannung ein Effektivwert der ersten Spannung sein. Weiterhin kann die Kenngröße der zweiten Spannung alternativ ein Effektivwert der zweiten Spannung sein.

Sinnvollerweise wird das Verhältnis der Kenngröße der zweiten Spannung zur Kenngröße der ersten Spannung aus einem vorgegebenen Intervall gewählt. Eine Obergrenze und/oder eine Untergrenze des vorgegebenen Intervalls kann unter anderem durch eine Ausgestaltung des steuerbaren Umrichters vorgegeben sein.

Ferner wird das Verhältnis der Kenngröße der zweiten Spannung zur Kenngröße der ersten Spannung vorzugsweise in Abhängigkeit eines Lastzustands desjenigen der beiden Stromnetze eingestellt, in welches die zweite Spannung eingespeist wird.

Falls die Kenngröße der ersten Spannung gegenüber dem ersten Sollwert um einen gewissen Prozentwert größer ist, kann daraus resultieren, dass eine Kenngröße der ersten Teilspannung größer ist als der zweite Sollwert. Falls hingegen die Kenngröße der ersten Spannung gegenüber dem ersten Sollwert um einen gewissen Prozentwert kleiner ist, kann daraus resultieren, dass die Kenngröße der ersten Teilspannung kleiner ist als der zweite Sollwert.

Zweckmäßigerweise wird, insbesondere falls die Kenngröße der ersten Spannung um einen ersten Prozentsatz von einem ersten Sollwert abweicht, die zweite Teilspannung vom steuerbaren Umrichter derart eingestellt, dass die Kenngröße der zweiten Spannung um einen zweiten Prozentsatz von einem zweiten Sollwert abweicht. Insbesondere damit die Kenngröße der zweiten Spannung eine kleinere prozentuale Abweichung gegenüber dem zweiten Sollwert aufweist als die Kenngröße der ersten Spannung gegenüber dem ersten Sollwert, kann der zweite Prozentsatz kleiner sein als der erste Prozentsatz.

Ist die Kenngröße der ersten Spannung z.B. größer als der erste Sollwert und ist folglich die Kenngröße der ersten Teilspannung größer als der zweite Sollwert, kann der steuerbare Umrichter die zweite Teilspannung derart einstellen, dass die zweite Teilspannung ein anderes Vorzeichen aufweist als die erste Teilspannung. Auf diese Weise kann die zweite Teilspannung eine Abweichung der Kenngröße der ersten Teilspannung gegenüber dem zweiten Sollwert bei der Überlagerung mit der ersten Teilspannung zumindest teilweise kompensieren. Dadurch kann erreicht werden, dass die Kenngröße der zweiten Spannung eine kleinere prozentuale Abweichung gegenüber dem zweiten Sollwert aufweist als die Kenngröße der ersten Spannung gegenüber dem ersten Sollwert.

Entsprechend kann - falls die Kenngröße der ersten Spannung kleiner ist als der erste Sollwert und die Kenngröße der ersten Teilspannung folglich kleiner ist als der zweite Sollwert - der steuerbare Umrichter die zweite Teilspannung derart einstellen, dass die zweite Teilspannung das gleiche Vorzeichen aufweist wie die erste Teilspannung.

Beim ersten Sollwert kann es sich z.B. um einen vorgegebenen Wert für den Betrag der ersten Spannung handeln. Entsprechend es sich beim zweiten Sollwert um einen vorgegebenen Wert für den Betrag der zweiten Spannung handeln. Alternativ kann der erste Sollwert ein vorgegebener Effektivwert für die erste Spannung sein und/oder kann der zweite Sollwert ein vorgegebener Effektivwert für die zweite Spannung sein.

Insbesondere kann die Kenngröße der zweiten Spannung gleich dem zweiten Sollwert sein, falls ein Lastzustand desjenigen der beiden Stromnetze, in das die zweite Spannung eingespeist wird, gleich einem vorgegebenen Lastzustand ist.

Gemäß einer bevorzugten Weiterbildung der Erfindung wird, insbesondere falls die Kenngröße der ersten Spannung vom ersten Sollwert abweicht, die zweite Teilspannung vom steuerbaren Umrichter derart eingestellt, dass die Kenngröße der zweiten Spannung auf dem zweiten Sollwert gehalten wird. Sinnvollerweise wird die zweite Teilspannung vom steuerbaren Umrichter derart eingestellt, dass die Kenngröße der zweiten Spannung auf dem zweiten Sollwert gehalten wird, falls die Kenngröße der ersten Spannung höchstens um einen vorgegeben Prozentsatz vom ersten Sollwert abweicht.

Der Diodengleichrichter weist zweckmäßigerweise eine Gleichspannungsseite und eine Wechselspannungsseite auf. Ebenso ist es zweckmäßig, wenn der steuerbare Umrichter eine Gleichspannungsseite und eine Wechselspannungsseite aufweist.

In einer vorteilhaften Ausführung der Erfindung speist der steuerbare Umrichter einen Wechselstrom in das Wechselstromnetz ein. Vorteilhafterweise wird dieser Wechselstrom vom Diodengleichrichter aufgenommen. Ferner umfasst der Wechselstrom vorzugsweise eine Oberschwingung mit einer solchen Oberschwingungsfrequenz, dass ein Oberschwingungsanteil der ersten Teilspannung reduziert wird, insbesondere kontinuierlich reduziert wird. Amplitude und insbesondere Phasenlage der Oberschwingung des Wechselstroms werden hierbei so gewählt, dass der Oberschwingungsanteil der ersten Teilspannung reduziert wird. Die Oberschwingungsfrequenz kann insbesondere ein ganzzahliges Vielfaches der Grundfrequenz der ersten Spannung sein.

In bevorzugter Weise wird der vom steuerbaren Umrichter in das Wechselstromnetz eingespeiste Wechselstrom (insbesondere die Oberschwingungen) so eingestellt, dass bei einer Überlagerung dieses Wechselstroms mit einem vom Diodengleichrichter erzeugten Wechselstrom ein Oberschwingungsanteil des vom Diodengleichrichter erzeugten Wechselstroms zumindest teilweise kompensiert wird. (Unter "vom Diodengleichrichter erzeugten Wechselstrom" werden hier die Oberschwingungen verstanden, die der Diodengleichrichter beim Betrieb auf der Wechselstromseite erzeugt.)

Eine weitere vorteilhafte Ausführung der Erfindung sieht vor, dass die zweite Teilspannung vom steuerbaren Umrichter derart eingestellt wird, dass die zweite Teilspannung einen Oberschwingungsanteil aufweist. Besonders vorteilhaft ist es, wenn der Oberschwingungsanteil der zweiten Teilspannung dergestalt ist, dass bei der Überlagerung der beiden Teilspannungen ein Oberschwingungsanteil der ersten Teilspannung durch den Oberschwingungsanteil der zweiten Teilspannung zumindest teilweise kompensiert wird.

Vorzugsweise wird der steuerbare Umrichter zum Verändern eines Blindleistungsanteils einer über das Wechselstromnetz übertragenen elektrischen Leistung derart angesteuert, dass der steuerbare Umrichter Blindleistung aus dem Wechselstromnetz aufnimmt oder Blindleistung in das Wechselstromnetz abgibt. Das Verändern des Blindleistungsanteils kann insbesondere ein Reduzieren des Blindleistungsanteils umfassen. Bei der Blindleistung, die der steuerbare Umrichter aus dem Wechselstromnetz aufnimmt oder Blindleistung in das Wechselstromnetz abgibt, kann es sich um eine induktive oder kapazitive Blindleistung handeln.

Durch das Verändern des Blindleistungsanteils der über das Wechselstromnetz übertragenen elektrischen Leistung kann die Kenngröße der ersten Spannung und/oder die Kenngröße der zweiten Spannung in einem vorgegebenen Kenngrößenband gehalten werden.

In bevorzugter Weise umfasst der Diodengleichrichter einen Sechs-Puls-Gleichrichter. Vorteilhaft ist auch ein Zwölf-Puls-Gleichrichter. Dabei kann der Zwölf-Puls-Gleichrichter wiederum durch zwei Sechs-Puls-Gleichrichter ausgebildet sein. Diese beiden Sechs-Puls-Gleichrichter sind zweckmäßigerweise an ihren Gleichspannungsseiten in Reihe geschaltet und/oder an ihren Wechselspannungsseiten parallel geschaltet. Mithilfe eines Zwölf-Puls-Gleichrichter kann eine Spannung erzeugt werden, die verglichen mit einer von einem Sechs-Puls-Gleichrichter erzeugbaren Spannung einen geringeren Oberschwingungsanteil aufweist.

Der steuerbare Umrichter umfasst einen selbstgeführten Umrichterin Form eines modularen Mehrstufenumrichters. Mithilfe eines selbstgeführten Umrichters kann eine Blindleistungsbelastung des Wechselstromnetzes verringert werden.

Prinzipiell kann der steuerbare Umrichter alternativ oder zusätzlich einen als Spannungszwischenkreisumrichter ausgestalteten selbstgeführten Umrichter umfassen.

Zweckmäßigerweise sind der Diodengleichrichter und der steuerbare Umrichter in Reihe geschaltet, insbesondere an ihren Gleichspannungsseiten.

Weiterhin weist der steuerbare Umrichter vorzugsweise eine Erdverbindung auf. Darüber hinaus können Steuerelemente, mittels welcher der steuerbare Umrichter angesteuert wird, über diese Erdverbindung geerdet sein.

Zudem ist es zweckmäßig, wenn der Diodengleichrichter an seiner Wechselspannungsseite an das Wechselstromnetz gekoppelt ist, insbesondere über einen Transformator.

Der steuerbare Umrichter ist an seiner Wechselspannungsseite an ein anderes Wechselstromnetz gekoppelt, insbesondere über einen anderen Transformator.

Einer oder mehrere der zuvor genannten Transformatoren können jeweils ein Bestandteil der Umrichtereinheit sein.

Des Weiteren sieht die vorteilhafte Ausführung der Erfindung vor, dass der steuerbare Umrichter über das andere Wechselstromnetz mit Wechselstrom gespeist wird. Hierbei erzeugt der steuerbare Umrichter, also durch die Steuerung des Umrichters, zweckmäßigerweise eine Oberschwingung auf der zweiten Teilspannung in der Weise, dass bei der Überlagerung der ersten Teilspannung mit der zweiten Teilspannung ein Oberschwingungsanteil der ersten Teilspannung durch den Oberschwingungsanteil der zweiten Teilspannung zumindest teilweise kompensiert wird.

Das oben beschriebene Verfahren kann unter anderem bei der sog. Hochspannungs-Gleichstrom-Übertragung, zur Einspeisung einer Spannung in einen Zwischenkreis eines Gleichspannungswandlers und/oder zur Einspeisung einer Spannung in einen Zwischenkreis eines Antriebsumrichters eingesetzt werden.

Des Weiteren kann die Umrichtereinheit als Wechselrichtereinheit betrieben werden. Vor und/oder nach einer Durchführung der oben beschriebenen Verfahrensschritte kann mithilfe der Umrichtereinheit aus einer Gleichspannung des Gleichstromnetzes eine Wechselspannung, insbesondere eine dreiphasige Wechselspannung, erzeugt werden. Sinnvollerweise wird die mithilfe der Umrichtereinheit erzeugte Wechselspannung in das Wechselstromnetz eingespeist.

Ferner ist es zweckmäßig, wenn die Wechselspannung vom steuerbaren Umrichter erzeugt wird. Weiter ist es möglich, dass die Wechselspannung vom steuerbaren Umrichter derart eingestellt wird, dass ein Verhältnis einer Kenngröße der Wechselspannung zu einer Kenngröße der Gleichspannung verändert wird.

In bevorzugter Weise ist die Kenngröße der Gleichspannung ein Betrag der Gleichspannung. Außerdem ist es bevorzugt, wenn die Kenngröße der Wechselspannung ein Betrag der Wechselspannung ist. Alternativ kann die Kenngröße der Gleichspannung ein Effektivwert der Gleichspannung sein. Weiterhin kann die Kenngröße der Wechselspannung alternativ ein Effektivwert der Wechselspannung sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

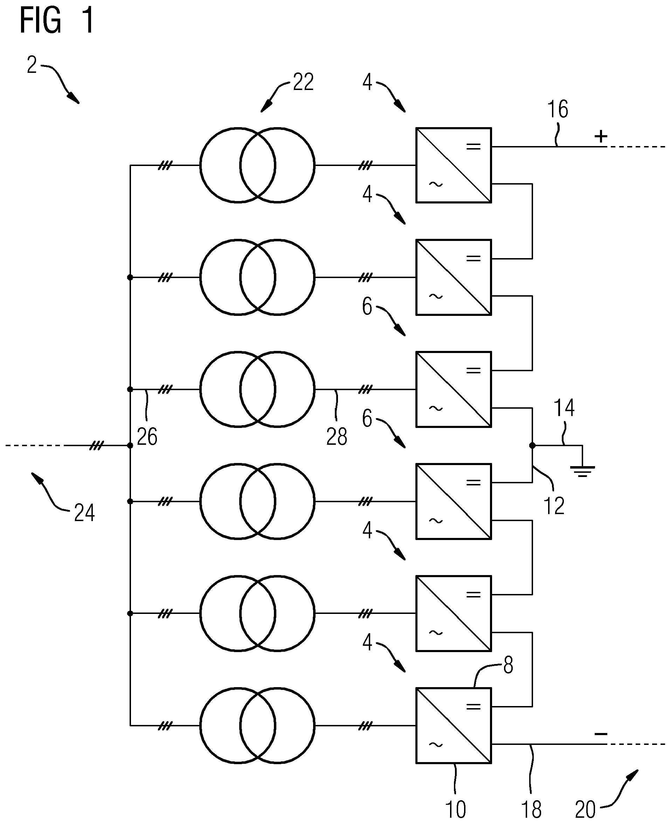

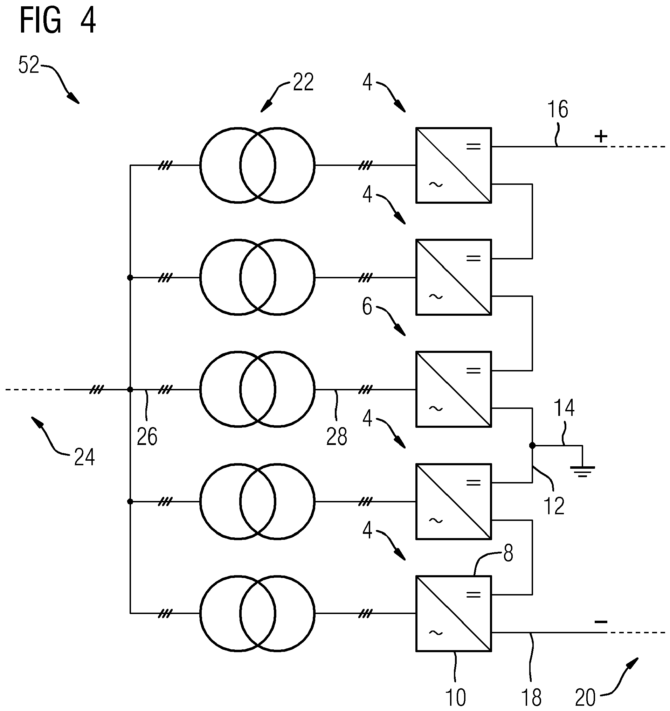

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden. Die Figuren 1 und 4 zeigen nicht beanspruchte Ausführungsbeispiele.

Es zeigen:
- FIG 1: eine Umrichtereinheit mit zwei steuerbaren Umrichtern und vier Diodengleichrichtern, bei der die steuerbaren Umrichter und die Diodengleichrichter wechselspannungsseitig an ein Wechselstromnetz gekoppelt sind;
- FIG 2: einen der Diodengleichrichter aus FIG 1;
- FIG 3: einen der steuerbaren Umrichter aus FIG 1, welcher als Stromzwischenkreisumrichter ausgestaltet ist;
- FIG 4: eine andere Umrichtereinheit mit einem steuerbaren Umrichter und vier Diodengleichrichtern, bei welcher der steuerbare Umrichter und die Diodengleichrichter wechselspannungsseitig an ein Wechselstromnetz gekoppelt sind;
- FIG 5: den steuerbaren Umrichter aus FIG 4, der als modularer Mehrstufenrichter mit einer Mehrzahl von Teilmodulen ausgestaltet ist;
- FIG 6: eins der Teilmodule des steuerbaren Umrichters aus FIG 5;
- FIG 7: eine weitere Umrichtereinheit mit einem steuerbaren Umrichter und vier Diodengleichrichtern, bei welcher die Diodengleichrichter an ein erstes Wechselstromnetz gekoppelt ist und der steuerbare Umrichter an ein zweites Wechselstromnetz gekoppelt ist; und
- FIG 8: den steuerbaren Umrichter aus FIG 7, welcher als Thyristor-Umrichter ausgestaltet ist.

FIG 1 zeigt ein Schaltbild einer Umrichtereinheit 2, welche vier Diodengleichrichter 4 und zwei steuerbare Umrichter 6 umfasst, wobei einerseits die Diodengleichrichter 4 identisch zueinander ausgestaltet sind und andererseits die steuerbaren Umrichter 6 identisch zueinander ausgestaltet sind.

Sowohl die Diodengleichrichter 4 als auch die steuerbaren Umrichter 6 weisen jeweils eine Gleichspannungsseite 8 und eine Wechselspannungsseite 10 auf.

Außerdem umfasst die Umrichtereinheit 2 mehrere Gleichspannungsverbindungsleitungen 12. Die Diodengleichrichter 4 und die steuerbaren Umrichter 6 sind an ihren Gleichspannungsseiten 8 über diese Gleichspannungsverbindungsleitungen 12 in Reihe geschaltet, wobei die steuerbaren Umrichter 6 an ihren Gleichspannungsseiten 8 über eine der Gleichspannungsverbindungsleitungen 12 direkt miteinander verbunden sind.

Darüber hinaus kann diejenige der Gleichspannungsverbindungsleitungen 12, welche die steuerbaren Umrichter 6 miteinander verbindet, eine Erdverbindung 14 aufweisen. Die beiden steuerbaren Umrichter 6 sind dann elektrisch mit dem Erdpotenzial verbunden. Eine solche Erdung ist jedoch nicht notwendig, da diese Gleichspannungsverbindungsleitungen 12 im Normalbetrieb auch ohne Erdung in der Nähe des Erdpotentials liegt, wenn die Symmetrie von + und - der beiden Gleichspannungsausgangsleitungen 16, 18 der Umrichtereinheit 2 gegen Erde sichergestellt ist.

Die erste Gleichspannungsausgangsleitung 16 ist mit einem der Diodengleichrichter 4 verbunden, und die zweite Gleichspannungsausgangsleitung 18 ist mit einem anderen der Diodengleichrichter 6 verbunden, wobei die beiden Gleichspannungsausgangsleitungen 16, 18 entgegengesetzt zueinander polarisierbar sind. Außerdem sind die beiden Gleichspannungsausgangsleitungen 16, 18 mit einem Gleichstromnetz 20 verbunden, das im einfachsten Fall aus einer Gleichstromleitung bestehen kann.

Des Weiteren sind die Diodengleichrichter 4 und die steuerbaren Umrichter 6 an ihren Wechselspannungsseiten 10 jeweils über einen Transformator 22 parallel geschaltet sowie an ein dreiphasiges Wechselstromnetz 24 gekoppelt. Dabei sind die Transformatoren 22 jeweils über eine stromnetzseitige Dreiphasenleitung 26 mit dem Wechselstromnetz 24 verbunden sowie über eine umrichterseitige Dreiphasenleitung 28 mit dem jeweiligen Diodengleichrichter 4 bzw. dem jeweiligen steuerbaren Umrichter 6 verbunden. Zudem sind die Transformatoren 22 als Dreiphasentransformatoren ausgeführt und bilden Bestandteile der Umrichtereinheit 2.

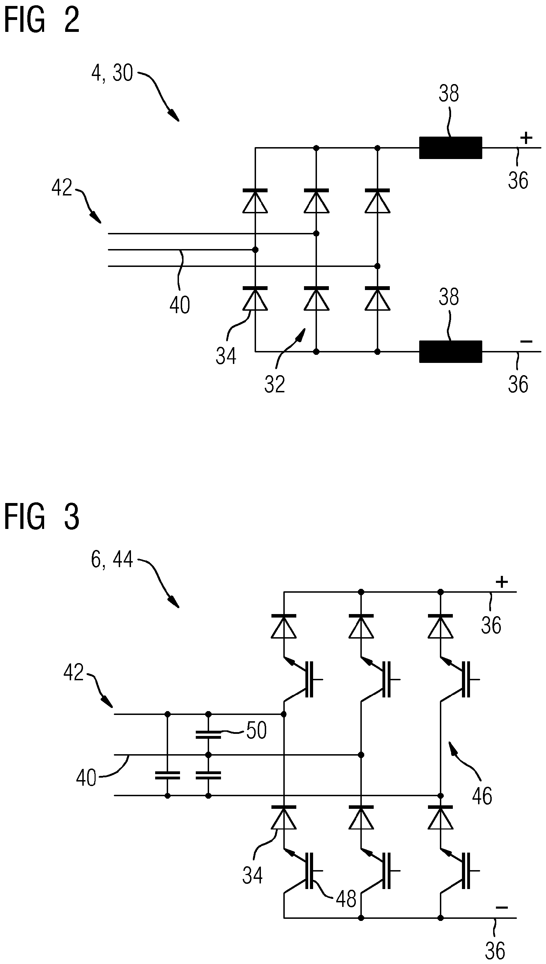

FIG 2 zeigt ein Schaltbild eines der Diodengleichrichter 4. Der dargestellte Diodengleichrichter 4 ist - genau so wie die übrigen Diodengleichrichter 4 der Umrichtereinheit 2 - als Sechs-Puls-Gleichrichter 30 ausgestaltet. Weiter umfasst der Sechs-Puls-Gleichrichter 30 drei Phasenmodule 32, von denen jedes zwei gleichsinnig in Reihe geschaltete Dioden 34 aufweist.

Ferner weist der Sechs-Puls-Gleichrichter 30 zwei entgegengesetzt zueinander polarisierbare Gleichspannungsanschlüsse 36 auf, die mit den drei Phasenmodulen 32 verbunden sind und durch welche die Phasenmodule 32 parallel geschaltet sind. Außerdem können die beiden Gleichspannungsanschlüsse 32 jeweils eine Glättungsdrossel 38 aufweisen.

Darüber hinaus verfügt jedes der drei Phasenmodule 32 über einen einphasigen Wechselspannungsanschluss 40 zwischen seinen beiden Dioden 34. Die drei einphasigen Wechselspannungsanschlüsse 40 bilden zusammen einen dreiphasigen Wechselspannungsanschluss 42 aus.

Der dreiphasige Wechselspannungsanschluss 42 dient zur Verbindung des Sechs-Puls-Gleichrichters 30 mit einer der zuvor erwähnten umrichterseitigen Dreiphasenleitungen 28. Die Gleichspannungsanschlüsse 36 hingegen dienen jeweils zur Verbindung des Sechs-Puls-Gleichrichters 30 mit einer der zuvor erwähnten Gleichspannungsverbindungsleitungen 12 bzw. einer der zuvor erwähnten Gleichspannungsausgangsleitungen 16, 18.

FIG 3 zeigt ein Schaltbild eines der beiden steuerbaren Umrichter 6. Der dargestellte steuerbare Umrichter 6 ist - genau wie der andere steuerbare Umrichter 6 der Umrichtereinheit 2 - als Stromzwischenkreisumrichter 44, d.h. als selbstgeführter Umrichter, ausgestaltet. Weiter umfasst der Stromzwischenkreisumrichter 44 drei Phasenmodule 46.

Diese Phasenmodule 46 weisen jeweils zwei gleichsinnig in Reihe geschaltete Dioden 34 sowie zwei mit den Dioden 34 in Reihe geschaltete IGBTs 48 auf, wobei eine der beiden Dioden 34 bezüglich ihrer Durchlassrichtung den beiden IGBTs 48 nachgeschaltet ist und die andere der beiden Dioden 34 zwischen die beiden IGBTs 48 geschaltet ist.

Außerdem weist der Stromzwischenkreisumrichter 44 zwei entgegengesetzt zueinander polarisierbare Gleichspannungsanschlüsse 36 auf, die mit den drei Phasenmodulen 46 verbunden sind und durch welche die Phasenmodule 46 parallel geschaltet sind.

Durch eine Ansteuerung der IGBTs 48 können Spannungen, die von den jeweiligen Phasenmodulen 46 des Stromzwischenkreisumrichters 44 erzeugt werden, verändert werden.

Darüber hinaus verfügt jedes der drei Phasenmodule 46 über einen einphasigen Wechselspannungsanschluss 40 zwischen seinen beiden Dioden 34. Diese drei einphasigen Wechselspannungsanschlüsse 40 bilden zusammen einen dreiphasigen Wechselspannungsanschluss 42 aus.

Weiterhin ist jeder der drei einphasigen Wechselspannungsanschlüsse 40 an jeden der beiden anderen einphasigen Wechselspannungsanschlüsse 40 jeweils über einen Kondensator 50 gekoppelt, welcher als Energiezwischenspeicher dient.

Der dreiphasige Wechselspannungsanschluss 42 dient zur Verbindung des Stromzwischenkreisumrichters 44 mit einer der zuvor erwähnten umrichterseitigen Dreiphasenleitungen 28. Die Gleichspannungsanschlüsse 36 hingegen dienen jeweils zur Verbindung des Stromzwischenkreisumrichters 44 mit einer der zuvor erwähnten Gleichspannungsverbindungsleitungen 12 bzw. einer der zuvor erwähnten Gleichspannungsausgangsleitungen 16, 18.

Zum Übertragen elektrischer Energie zwischen dem Wechselstromnetz 24 und dem Gleichstromnetz 20, wird mithilfe der Umrichtereinheit 2 aus einer dreiphasigen Wechselspannung des Wechselstromnetzes 24 eine Gleichspannung erzeugt, die in das Gleichstromnetz 20 eingespeist wird. Dabei erzeugen die vier Diodengleichrichter 4 und die beiden steuerbaren Umrichter 6 jeweils eine Teilspannung. Die Gleichspannung ergibt sich aus einer Überlagerung dieser Teilspannungen. Weiterhin setzt sich die Wechselspannung aus einer Grundschwingung und mehreren Oberschwingungen zusammen.

Insbesondere im Falle einer dynamischen Schwankung der Wechselspannung oder zur stationären Entkopplung der Gleichspannung von der Wechselspannung, stellen die steuerbaren Umrichter 6 die von ihnen erzeugten Teilspannungen derart ein, dass ein Verhältnis eines Betrags der Wechselspannung zu einem Betrag der Gleichspannung verändert wird. Bei der Wechselspannung bezieht sich der Betrag auf eine Amplitude der Grundschwingung der Wechselspannung.

Des Weiteren wird das Verhältnis des Betrags der Wechselspannung zum Betrag der Gleichspannung aus einem vorgegebenen Intervall gewählt. Eine Obergrenze des vorgegebenen Intervalls sowie dessen Untergrenze sind durch eine Anzahl der steuerbaren Umrichter 6 sowie durch deren Ausgestaltung vorgegeben.

Weiterhin wird das besagte Verhältnis in Abhängigkeit eines Lastzustands des Gleichstromnetzes 20 eingestellt.

Falls der Betrag der Wechselspannung um einen ersten Prozentsatz von einem ersten Sollwert abweicht, stellen die steuerbaren Umrichter 6 die von ihnen erzeugten Teilspannungen derart ein, dass der Betrag der Gleichspannung um einen zweiten, kleineren Prozentsatz von einem zweiten Sollwert abweicht. Beim ersten Sollwert handelt es sich um einen vorgegebenen Wert für den Betrag der Wechselspannung, während es sich beim zweiten Sollwert um einen vorgegebenen Wert für den Betrag der Gleichspannung handelt.

Weiter stellen die steuerbaren Umrichter 6 die von ihnen erzeugten Teilspannungen derart ein, dass der Betrag der Gleichspannung auf dem zweiten Sollwert gehalten wird, falls der Betrag der Wechselspannung höchstens um einen vorgegeben Prozentsatz vom ersten Sollwert abweicht.

Die Umrichtereinheit 2 ist außerdem als Wechselrichtereinheit betreibbar. Vor oder nach einer Durchführung des oben beschriebenen Verfahrens wird mithilfe der Umrichtereinheit 2 aus einer Gleichspannung des Gleichstromnetzes 20 eine dreiphasige Wechselspannung erzeugt, die in das Wechselstromnetz 24 eingespeist wird. Eine Übertragungsrichtung der elektrischen Energie wird also umgekehrt - bezogen auf eine Übertragungsrichtung der elektrischen Energie beim weiter oben beschriebenen Verfahren.

Beim Betrieb der Umrichtereinheit 2 als Wechselrichtereinheit stellen die steuerbaren Umrichter 6 die Wechselspannung, insbesondere im Falle einer dynamischen Schwankung der Gleichspannung oder zur stationären Entkopplung der Wechselspannung von der Gleichspannung, derart ein, dass ein Verhältnis eines Betrags der Wechselspannung zu einem Betrag der Gleichspannung verändert wird.

Die nachfolgende Beschreibung beschränkt sich im Wesentlichen auf die Unterschiede zu dem im Zusammenhang mit FIG 1 bis FIG 3 diskutierten Ausführungsbeispiel, auf das bezüglich gleich bleibender Merkmale und Funktionen verwiesen wird. Werden in verschiedenen Figuren die gleichen Bezugszeichen verwendet, so bezeichnen diese im Wesentlichen gleiche bzw. einander entsprechende Elemente. Im Wesentlichen gleiche bzw. einander entsprechende Elemente können aber auch mit unterschiedlichen Bezugszeichen bezeichnet sein, falls dies zweckmäßig ist.

FIG 4 zeigt ein Schaltbild einer anderen Umrichtereinheit 52, welche vier Diodengleichrichter 4 und einen steuerbaren Umrichter 6 umfasst.

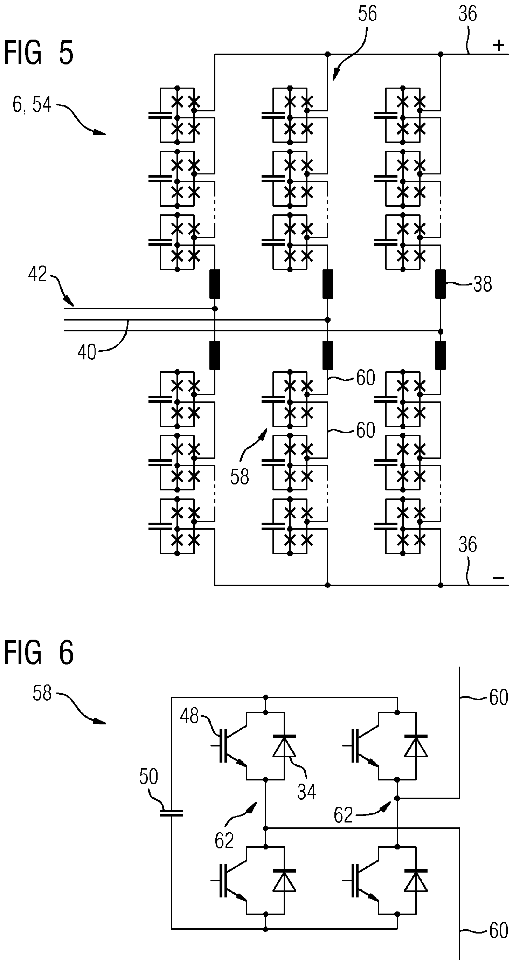

Im vorliegenden Ausführungsbeispiel ist der steuerbare Umrichter 6 als modularer Mehrstufenumrichter ausgestaltet, der weiter unten im Zusammenhang mit FIG 5 beschrieben wird.

Diese Umrichtereinheit 52 umfasst mehrere Gleichspannungsverbindungsleitungen 12, über welche die Diodengleichrichter 4 und der steuerbare Umrichter 6 an ihren Gleichspannungsseiten 8 in Reihe geschaltet sind.

Außerdem kann diejenige der Gleichspannungsverbindungsleitungen 12, welche den steuerbaren Umrichter 6 mit einem der Diodengleichrichter 4 verbindet, eine Erdverbindung 14 aufweisen, sodass der steuerbare Umrichter 6 elektrisch mit dem Erdpotenzial verbunden ist.

Ferner umfasst die andere Umrichtereinheit 52 eine erste Gleichspannungsausgangsleitung 16 und eine zweite Gleichspannungsausgangsleitung 18, die beide mit einem Gleichstromnetz 20 verbunden sind.

Des Weiteren sind die Diodengleichrichter 4 und der steuerbare Umrichter 6 an ihren Wechselspannungsseiten 10 jeweils über einen Transformator 22 parallel geschaltet sowie an ein dreiphasiges Wechselstromnetz 24 gekoppelt. Dabei sind die Transformatoren 22 jeweils über eine umrichterseitige Dreiphasenleitung 28 mit dem jeweiligen Diodengleichrichter 4 bzw. dem steuerbaren Umrichter 6 verbunden.

FIG 5 zeigt ein Schaltbild des steuerbaren Umrichters 6 der anderen Umrichtereinheit 52. Im vorliegenden Fall ist der steuerbare Umrichter 6 als modularer Mehrstufenumrichter 54, d.h. als selbstgeführter Umrichter, ausgestaltet. Die Schaltung nach FIG 5 kann auch in der Umrichtereinheit 2 aus FIG 1 eingesetzt werden, und umgekehrt.

Der modulare Mehrstufenumrichter 54 umfasst drei Phasenmodule 56, von denen jedes eine Mehrzahl von identisch ausgestalteten Teilmodulen 58 aufweist, die über Modulverbindungsleitungen 60 in Reihe geschaltet sind.

Ferner weist der modulare Mehrstufenumrichter 54 zwei entgegengesetzt zueinander polarisierbare Gleichspannungsanschlüsse 36 auf, die mit seinen Phasenmodulen 56 verbunden sind und durch welche die Phasenmodule 56 parallel geschaltet sind.

Jedes der drei Phasenmodule 56 des modularen Mehrstufenumrichters 54 verfügt über zwei Glättungsdrosseln 38, die zwischen zwei der Teilmodule 58 des jeweiligen Phasenmoduls 56 geschaltet sind. Alternative Anordnungen, z.B. in den Gleichspannungsausgangsleitungen 16, 18 oder in den Zuleitungen von den Phasenmodule 56 zu den Gleichspannungsausgangsleitungen 16, 18 sind möglich und ebenso vorteilhaft.

Darüber hinaus weist jedes der drei Phasenmodule 56 einen einphasigen Wechselspannungsanschluss 40 zwischen seinen beiden Glättungsdrosseln 38 auf. Die drei einphasigen Wechselspannungsanschlüsse 40 bilden zusammen einen dreiphasigen Wechselspannungsanschluss 42 aus.

Der dreiphasige Wechselspannungsanschluss 42 dient zur Verbindung des modularen Mehrstufenumrichters 54 mit einer der umrichterseitigen Dreiphasenleitungen 28 der anderen Umrichtereinheit 52. Die Gleichspannungsanschlüsse 36 hingegen dienen jeweils zur Verbindung des modularen Mehrstufenumrichters 54 mit einer Gleichspannungsverbindungsleitung 12 der anderen Umrichtereinheit 52.

FIG 6 zeigt ein Schaltbild eines der Teilmodule 58 im Detail. Das Teilmodul 58 ist mit einen Kondensator 50 als Energiezwischenspeicher ausgestattet. Außerdem weist das Teilmodul 58 zwei Untermodule 62 auf, die dem Kondensator 50 parallel geschaltet sind. Jedes der beiden Untermodule 62 umfasst zwei IGBTs 48, die in Reihe geschaltet sind, sowie zwei Dioden 34, die in Reihe geschaltet sind, wobei jedem der beiden IGBTs 48 eine der beiden Dioden 34 gegensinnig parallel geschaltet ist. Zudem sind die beiden Untermodule 62 zwischen ihren IGBTs 48 bzw. ihren Dioden 34 jeweils mit einer der zuvor erwähnten Modulverbindungsleitungen 60 verbunden.

Das Teilmodul 58 ist als Vollbrücken-Teilmodul mit zwei Untermodulen 62 ausgeführt, die dem Kondensator 50 parallel geschaltet sind. Ebenso gut möglich ist eine Ausführung als Halbbrücken-Teilmodul mit nur einem Untermodul 62. Hierbei ist der Wechselspannungseingang zweckmäßigerweise zwischen die beiden Einheiten aus IGBT 48 und Diode 34 gelegt und der Gleichspannungseingang ist mit dem Kondensator 50 verbunden.

In FIG 5 sind bei den Teilmodulen 58 die Parallelschaltungen aus den IGBTs 48 und den Dioden 34 der Übersichtlichkeit jeweils mit einem Kreuz dargestellt.

Durch eine Ansteuerung der IGBTs 48 können Spannungen, die von den jeweiligen Phasenmodulen 56 des modularen Mehrstufenumrichters 54 erzeugt werden, verändert werden.

Zum Übertragen elektrischer Energie zwischen dem Wechselstromnetz 24 und dem Gleichstromnetz 20, wird mithilfe der anderen Umrichtereinheit 52 aus einer dreiphasigen Wechselspannung des Wechselstromnetzes 24 eine Gleichspannung erzeugt, die in das Gleichstromnetz 20 eingespeist wird. Dabei erzeugen die vier Diodengleichrichter 4 und der steuerbare Umrichter 6 jeweils eine Teilspannung. Die Gleichspannung ergibt sich aus einer Überlagerung dieser Teilspannungen.

Insbesondere im Falle einer dynamischen Schwankung der Wechselspannung oder zur stationären Entkopplung der Gleichspannung von der Wechselspannung, stellt der steuerbaren Umrichter 6 die von ihm erzeugte Teilspannung derart ein, dass ein Verhältnis eines Betrags der Wechselspannung zu einem Betrag der Gleichspannung verändert wird.

Generell wird der Grundschwingungsanteil des Wechselstroms vom Wechselspannungsanschluss her in die Umrichtereinheit 52 gespeist. Der Umrichter 6 wird den Gleichstrom in den Gleichspannungsanschluss speisen und insbesondere zusätzlich einen Oberschwingungsanteil als Wechselstromanteil in den Wechselspannungsanschluss speisen zur Verringerung der dortigen Oberschwingungen.

Allerdings besteht auch die Möglichkeit, dass der steuerbare Umrichter 6 Wechselstrom in das Wechselstromnetz 24 einspeist, welcher von den Diodengleichrichtern 4 aufgenommen wird. Dieser Wechselstrom umfasst eine Oberschwingung mit einer solchen Oberschwingungsfrequenz, dass ein Oberschwingungsanteil der mithilfe der Umrichtereinheit 52 erzeugten Gleichspannung reduziert wird. Die Oberschwingungsfrequenz des Wechselstromes ist hierbei ein ganzzahliges Vielfaches einer Grundfrequenz der zuvor erwähnten Wechselspannung, mit der die Umrichtereinheit 52 über das Wechselstromnetz 24 versorgt wird. Insofern wirkt der steuerbare Umrichter 6 dem vorhandenen Oberschwingungsanteil entgegen und wird hierdurch abhängig davon auf der Gleichstromseite Oberschwingungen teilweise kompensieren.

Alternativ oder zusätzlich stellt der steuerbare Umrichter 6 die von ihm erzeugte Teilspannung derart ein, dass diese Teilspannung einen vorbestimmten Oberschwingungsanteil aufweist. Der vorbestimmte Oberschwingungsanteil ist solcherart, dass bei einer Überlagerung der vom steuerbaren Umrichter 6 erzeugten Teilspannung mit weiteren Teilspannungen, die von den Diodengleichrichtern 4 erzeugt werden, Oberschwingungsanteile der letztgenannten Teilspannungen durch den vorbestimmten Oberschwingungsanteil kompensiert werden.

Ferner wird der steuerbare Umrichter 6 zum Verändern eines Blindleistungsanteils einer über das Wechselstromnetz 24 übertragenen elektrischen Leistung derart angesteuert, dass der steuerbare Umrichter 6 Blindleistung aus dem Wechselstromnetz 34 aufnimmt oder Blindleistung in das Wechselstromnetz abgibt.

Die im Zusammenhang mit dem vorliegenden Ausführungsbeispiel beschriebenen Verfahrensmerkmale können grundsätzlich auch ergänzend beim vorausgegangenen Ausführungsbeispiel, d.h. dem im Zusammengang mit FIG 1 bis FIG 3 diskutierten Ausführungsbeispiel, realisiert werden.

Die nachfolgende Beschreibung beschränkt sich im Wesentlichen auf die Unterschiede zu dem im Zusammenhang mit FIG 4 bis

FIG 6 diskutierten Ausführungsbeispiel, auf das bezüglich gleich bleibender Merkmale und Funktionen verwiesen wird.

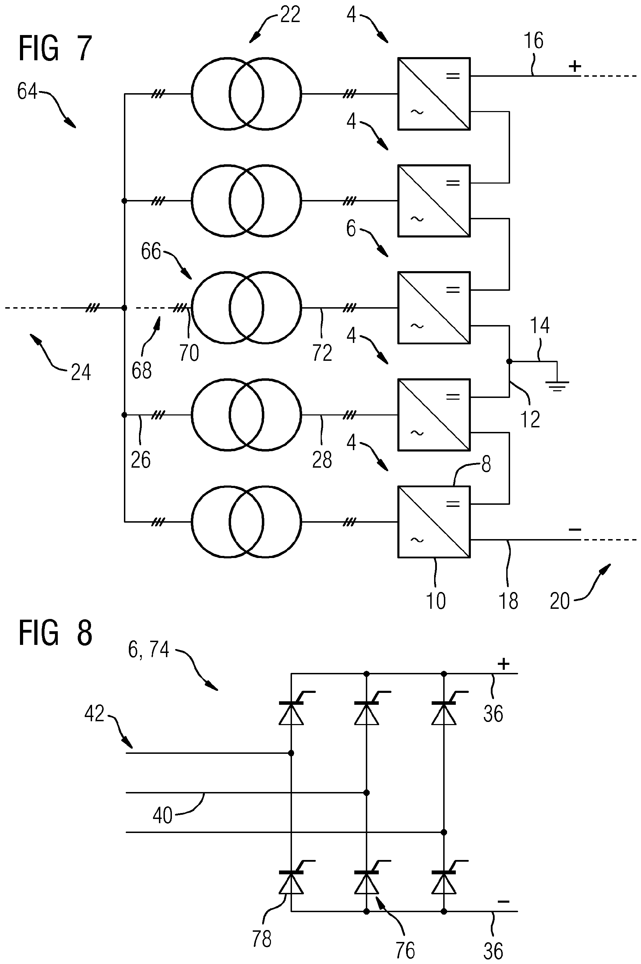

FIG 7 zeigt ein Schaltbild einer weiteren Umrichtereinheit 64, welche vier Diodengleichrichter 4 und einen steuerbaren Umrichter 6 umfasst.

Im vorliegenden Ausführungsbeispiel ist der steuerbare Umrichter 6 als Thyristor-Umrichter ausgestaltet, was weiter unten im Zusammenhang mit FIG 8 diskutiert wird.

Ferner umfasst diese Umrichtereinheit 64 eine erste Gleichspannungsausgangsleitung 16 und eine zweite Gleichspannungsausgangsleitung 18, die beide mit einem Gleichstromnetz 20 verbunden sind.

Des Weiteren sind die Diodengleichrichter 4 an ihren Wechselspannungsseiten 10 jeweils über einen Transformator 22 parallel geschaltet sowie an ein dreiphasiges Wechselstromnetz 24 gekoppelt. Diese Transformatoren 22 sind jeweils über eine stromnetzseitige Dreiphasenleitung 26 mit dem Wechselstromnetz 24 sowie über eine umrichterseitige Dreiphasenleitung 28 mit dem jeweiligen Diodengleichrichter 4 verbunden.

Der steuerbare Umrichter 6 ist über einen weiteren Transformator 66 an ein anderes Wechselstromnetz 68 gekoppelt. Dieser Transformator 66 ist über eine weitere stromnetzseitige Dreiphasenleitung 70 mit dem anderen Wechselstromnetz 68 sowie über eine weitere umrichterseitige Dreiphasenleitung 72 mit dem steuerbaren Umrichter 6 verbunden.

FIG 8 zeigt ein Schaltbild des steuerbaren Umrichters 6 der weiteren Umrichtereinheit 64. Im vorliegenden Fall ist der steuerbare Umrichter 6 als Thyristor-Umrichter 74, d.h. als fremdgeführter Umrichter, ausgestaltet, welcher in seinem prinzipiellen Aufbau dem Sechs-Pulsgleichrichter 30 aus FIG 2 ähnelt.

Der Thyristor-Umrichter 74 umfasst drei Phasenmodule 76, von denen jedes zwei gleichsinnig in Reihe geschaltete Thyristoren 78 aufweist.

Ferner weist der Thyristor-Umrichter 74 zwei entgegengesetzt zueinander polarisierbare Gleichspannungsanschlüsse 36 auf, die mit den drei Phasenmodulen 76 verbunden sind und durch welche die Phasenmodule 76 parallel geschaltet sind.

Durch eine Ansteuerung der Thyristoren 78 können Spannungen, die von den jeweiligen Phasenmodulen 76 des Thyristor-Umrichters 74 erzeugt werden, verändert werden.

Darüber hinaus weist jedes der drei Phasenmodule 76 zwischen seinen beiden Thyristoren 78 einen einphasigen Wechselspannungsanschluss 40 auf. Diese drei einphasigen Wechselspannungsanschlüsse 40 bilden zusammen einen dreiphasigen Wechselspannungsanschluss 42 aus.

Der dreiphasige Wechselspannungsanschluss 42 dient zur Verbindung des Thyristor-Umrichters 74 mit der weiteren umrichterseitigen Dreiphasenleitungen 72. Die Gleichspannungsanschlüsse 36 hingegen dienen jeweils zur Verbindung des Thyristor-Umrichters 74 mit einer Gleichspannungsverbindungsleitung 12 der weiteren Umrichtereinheit 64.

Auch im vorliegenden Ausführungsbeispiel wird elektrische Energie zwischen dem Wechselstromnetz 24 und dem Gleichstromnetz 20 übertragen. Dazu wird mithilfe der weiteren Umrichtereinheit 64 aus einer dreiphasigen Wechselspannung des Wechselstromnetzes 24 eine Gleichspannung erzeugt, die in das Gleichstromnetz 20 eingespeist wird. Dabei ergibt sich die Gleichspannung aus einer Überlagerung von Teilspannungen, die von den vier Diodengleichrichtern 4 und dem steuerbaren Umrichter 6 erzeugt werden.

Obwohl die Erfindung im Detail durch die bevorzugten Ausführungsbeispiele näher illustriert und beschrieben wurde, so ist die Erfindung nicht durch das die offenbarten Beispiele eingeschränkt und andere Variationen können hieraus abgeleitet werden, ohne den Schutzumfang der Erfindung, wie in den Ansprüchen definiert, zu verlassen.

### Bezugszeichenliste

- 2: Umrichtereinheit
- 4: Diodengleichrichter
- 6: Umrichter
- 8: Gleichspannungsseite
- 10: Wechselspannungsseite
- 12: Gleichspannungsverbindungsleitung
- 14: Erdverbindung
- 16: Gleichspannungsausgangsleitung
- 18: Gleichspannungsausgangsleitung
- 20: Gleichstromnetz
- 22: Transformator
- 24: Wechselstromnetz
- 26: Dreiphasenleitung
- 28: Dreiphasenleitung
- 30: Sechs-Puls-Gleichrichter
- 32: Phasenmodul
- 34: Diode
- 36: Gleichspannungsanschluss
- 38: Glättungsdrossel
- 40: Wechselspannungsanschluss
- 42: Wechselspannungsanschluss
- 44: Stromzwischenkreisumrichter
- 46: Phasenmodul
- 48: IGBT
- 50: Kondensator
- 52: Umrichtereinheit
- 54: Mehrstufenumrichter
- 56: Phasenmodul
- 58: Teilmodul
- 60: Modulverbindungsleitung
- 62: Untermodul
- 64: Umrichtereinheit
- 66: Transformator
- 68: Wechselstromnetz
- 70: Dreiphasenleitung
- 72: Dreiphasenleitung
- 74: Thyristor-Umrichter
- 76: Phasenmodul
- 78: Thyristor

## Patentansprüche

1. Verfahren zum Übertragen elektrischer Energie zwischen einem Wechselstromnetz (24) und einem Gleichstromnetz (20), bei dem aus einer ersten Spannung eines dieser beiden Stromnetze (20, 24) mithilfe einer Umrichtereinheit (2; 52; 64) eine zweite Spannung erzeugt wird, die in das andere der beiden Stromnetze (20, 24) eingespeist wird, wobei die Umrichtereinheit (2; 52; 64) einen steuerbaren Umrichter (6) umfasst,
**dadurch gekennzeichnet, dass** die Umrichtereinheit (2; 52; 64) einen Diodengleichrichter (4) umfasst, die zweite Spannung sich aus einer Überlagerung einer ersten Teilspannung, die vom Diodengleichrichter (4) erzeugt wird, und einer zweiten Teilspannung, die vom steuerbaren Umrichter (6) erzeugt wird, ergibt und die zweite Teilspannung vom steuerbaren Umrichter (6) derart eingestellt wird, dass ein Verhältnis einer Kenngröße der zweiten Spannung zu einer Kenngröße der ersten Spannung verändert wird, wobei die erste Spannung eine dreiphasige Wechselspannung ist und die zweite Spannung eine Gleichspannung ist, und
der steuerbare Umrichter (6) einen modularen Mehrstufenumrichter (54) umfasst, und der steuerbare Umrichter (6) über ein anderes Wechselstromnetz (68) mit Wechselstrom gespeist wird.

2. Verfahren nach Anspruch 1,
**dadurch gekennzeichnet, dass** die Kenngröße der ersten Spannung ein Betrag der ersten Spannung ist und die Kenngröße der zweiten Spannung ein Betrag der zweiten Spannung ist.

3. Verfahren nach einem der vorhergehenden Ansprüche,
**dadurch gekennzeichnet, dass** das Verhältnis der Kenngröße der zweiten Spannung zur Kenngröße der ersten Spannung aus einem vorgegebenen Intervall gewählt wird, wobei das Verhältnis in Abhängigkeit eines Lastzustands desjenigen der beiden Stromnetze (20, 24) eingestellt wird, in welches die zweite Spannung eingespeist wird.

4. Verfahren nach einem der vorhergehenden Ansprüche,
**dadurch gekennzeichnet , dass**,
falls die Kenngröße der ersten Spannung um einen ersten Prozentsatz von einem ersten Sollwert abweicht, die zweite Teilspannung vom steuerbaren Umrichter (6) derart eingestellt wird, dass die Kenngröße der zweiten Spannung um einen zweiten Prozentsatz, der kleiner ist als der erste Prozentsatz, von einem zweiten Sollwert abweicht.

5. Verfahren nach einem der vorhergehenden Ansprüche,
**dadurch gekennzeichnet, dass**,
falls die Kenngröße der ersten Spannung vom ersten Sollwert abweicht, die zweite Teilspannung vom steuerbaren Umrichter (6) derart eingestellt wird, dass die Kenngröße der zweiten Spannung auf dem zweiten Sollwert gehalten wird.

6. Verfahren nach einem der vorhergehenden Ansprüche,
**dadurch gekennzeichnet, dass**
der steuerbare Umrichter (6) einen Wechselstrom in das Wechselstromnetz (24) einspeist, der vom Diodengleichrichter (4) aufgenommen wird und der eine Oberschwingung mit einer solchen Oberschwingungsfrequenz umfasst, dass ein Oberschwingungsanteil der ersten Teilspannung reduziert wird.

7. Verfahren nach einem der vorhergehenden Ansprüche,
**dadurch gekennzeichnet , dass**
die zweite Teilspannung vom steuerbaren Umrichter (6) derart eingestellt wird, dass die zweite Teilspannung solch einen Oberschwingungsanteil aufweist, dass bei der Überlagerung der beiden Teilspannungen ein Oberschwingungsanteil der ersten Teilspannung durch den Oberschwingungsanteil der zweiten Teilspannung zumindest teilweise kompensiert wird.

8. Verfahren nach einem der vorhergehenden Ansprüche,
**dadurch gekennzeichnet, dass**
der Diodengleichrichter (4) einen Sechs-Puls-Gleichrichter (30) umfasst.

9. Verfahren nach einem der vorhergehenden Ansprüche,
**dadurch gekennzeichnet, dass**
der Diodengleichrichter (4) und der steuerbare Umrichter (6) an ihren Gleichspannungsseiten (8) in Reihe geschaltet sind.

10. Verfahren nach einem der vorhergehenden Ansprüche,
**dadurch gekennzeichnet, dass**
aus einer Gleichspannung des Gleichstromnetzes (20) mithilfe der Umrichtereinheit (2; 52; 64) eine Wechselspannung erzeugt wird, die in das Wechselstromnetz (24) eingespeist wird, wobei die Wechselspannung vom steuerbaren Umrichter (6) erzeugt wird und die Wechselspannung vom steuerbaren Umrichter (6) derart eingestellt wird, dass ein Verhältnis einer Kenngröße der Wechselspannung zu einer Kenngröße der Gleichspannung verändert wird.

## Claims

1. Method for transmitting electrical energy between an AC system (24) and a DC system (20), in which a second voltage is generated from a first voltage of one of said two power supply systems (20, 24) with the aid of a converter unit (2; 52; 64), said second voltage being fed into the other of the two power supply systems (20, 24), wherein the converter unit (2; 52; 64) comprises a controllable converter (6),
**characterized in that**
the converter unit (2; 52; 64) comprises a diode rectifier (4), the second voltage results from a superposition of a first partial voltage, which is generated by the diode rectifier (4), and a second partial voltage, which is generated by the controllable converter (6), and the second partial voltage is adjusted by the controllable converter (6) in such a way that a ratio of a characteristic variable of the second voltage with respect to a characteristic variable of the first voltage is changed, wherein the first voltage is a three-phase AC voltage and the second voltage is a DC voltage, and
the controllable converter (6) comprises a modular multilevel converter (54), and the controllable converter (6) is fed with alternating current by means of another AC system (68).

2. Method according to Claim 1,
**characterized in that**
the characteristic variable of the first voltage is a magnitude of the first voltage and the characteristic variable of the second voltage is a magnitude of the second voltage.

3. Method according to either of the preceding claims,
**characterized in that**
the ratio of the characteristic variable of the second voltage with respect to the characteristic variable of the first voltage is selected from a prescribed interval, wherein the ratio is adjusted depending on a load state of that one of the two power supply systems (20, 24) into which the second voltage is fed.

4. Method according to one of the preceding claims,
**characterized in that**,
if the characteristic variable of the first voltage deviates from a first setpoint value by a first percentage, the second partial voltage is adjusted by the controllable converter (6) in such a way that the characteristic variable of the second voltage deviates from a second setpoint value by a second percentage, which is lower than the first percentage.

5. Method according to one of the preceding claims,
**characterized in that**,
if the characteristic variable of the first voltage deviates from the first setpoint value, the second partial voltage is adjusted by the controllable converter (6) in such a way that the characteristic variable of the second voltage is kept at the second setpoint value.

6. Method according to one of the preceding claims,
**characterized in that**
the controllable converter (6) feeds an alternating current into the AC system (24), said alternating current being taken up by the diode rectifier (4) and comprising a harmonic at such a harmonic frequency that a harmonic component of the first partial voltage is reduced.

7. Method according to one of the preceding claims,
**characterized in that**
the second partial voltage is adjusted by the controllable converter (6) in such a way that the second partial voltage has such a harmonic component that, when the two partial voltages are superposed, a harmonic component of the first partial voltage is at least partly compensated by the harmonic component of the second partial voltage.

8. Method according to one of the preceding claims,
**characterized in that**
the diode rectifier (4) comprises a six-pulse rectifier (30).

9. Method according to one of the preceding claims,
**characterized in that**
the diode rectifier (4) and the controllable converter (6) are connected in series on their DC voltage sides (8).

10. Method according to one of the preceding claims,
**characterized in that**
an AC voltage is generated from a DC voltage of the DC system (20) with the aid of the converter unit (2; 52; 64), said AC voltage being fed into the AC system (24), wherein the AC voltage is generated by the controllable converter (6) and the AC voltage is adjusted by the controllable converter (6) in such a way that a ratio of a characteristic variable of the AC voltage with respect to a characteristic variable of the DC voltage is changed.

## Revendications

1. Procédé de transport d'énergie électrique entre un réseau (24) de courant alternatif et un réseau (20) de courant continu, dans lequel on produit, à partir d'une première tension de l'un de ces deux réseaux (20, 24) de courant, à l'aide d'une unité (2 ; 52 ; 64) de convertisseur, une deuxième tension, qui est injectée dans l'autre des deux réseaux (20, 24) de courant, unité (2 ; 52 ; 64) de convertisseur comprenant un convertisseur (6) pouvant être commandé,
**caractérisé en ce que**
l'unité (2 ; 52 ; 64) de convertisseur comprend un redresseur (4) à diodes, qui donne la deuxième tension à partir d'une superposition d'une première tension partielle produite par le redresseur (4) à diodes et d'une deuxième tension partielle produite par le convertisseur (6) pouvant être commandé et on règle la deuxième tension partielle par le convertisseur (6) pouvant être commandé, de manière à modifier un rapport d'une grandeur caractéristique de la deuxième tension à une grandeur caractéristique de la première tension, la première tension étant une tension alternative triphasée et la deuxième tension une tension continue, et
le convertisseur (6) pouvant être commandé comprend un convertisseur (54) modulaire à plusieurs étages et on alimente le convertisseur (6) pouvant être commandé en un courant alternatif par un autre réseau (68) de courant alternatif.

2. Procédé suivant la revendication 1,
**caractérisé en ce que**
la grandeur caractéristique de la première tension est une valeur absolue de la première tension et la grandeur caractéristique de la deuxième tension est une valeur absolue de la deuxième tension.

3. Procédé suivant l'une des revendications précédentes,
**caractérisé en ce que**
l'on choisit le rapport de la grandeur caractéristique de la deuxième tension à la grandeur caractéristique de la première tension dans un intervalle donné à l'avance, le rapport étant réglé en fonction d'un état de charge de celui des deux réseaux (20, 24) de courant, dans lequel on injecte la deuxième tension.

4. Procédé suivant l'une des revendications précédentes,
**caractérisé en ce que**,
si la grandeur caractéristique de la première tension s'écarte d'un premier pourcentage d'une première valeur de consigne, on règle la deuxième tension partielle par le convertisseur (6) pouvant être commandé, de manière à ce que la grandeur caractéristique de la deuxième tension s'écarte d'un deuxième pourcentage, qui est plus petit que le premier pourcentage, d'une deuxième valeur de consigne.

5. Procédé suivant l'une des revendications précédentes,
**caractérisé en ce que**,
si la grandeur caractéristique de la première tension s'écarte de la première valeur de consigne, on règle la deuxième tension partielle par le convertisseur (6) pouvant être commandé, de manière à maintenir la grandeur caractéristique de la deuxième tension à la deuxième valeur de consigne.

6. Procédé suivant l'une des revendications précédentes,
**caractérisé en ce que**
le convertisseur (6) pouvant être commandé injecte un courant alternatif dans le réseau (24) de courant alternatif, qui est reçu par le redresseur (4) à diodes et qui comprend un harmonique ayant une fréquence d'harmonique telle qu'une proportion d'harmonique de la première tension partielle est réduite.

7. Procédé suivant l'une des revendications précédentes,
**caractérisé en ce que**
l'on règle la deuxième tension partielle par le convertisseur (6) pouvant être commandé, de manière à ce que la deuxième tension partielle ait une proportion d'harmonique telle que, lors de la superposition des deux tensions partielles, une proportion d'harmonique de la première tension partielle soit compensée, au moins en partie, par la proportion d'harmonique de la deuxième tension partielle.

8. Procédé suivant l'une des revendications précédentes,
**caractérisé en ce que**
le redresseur (4) à diodes comprend un redresseur (30) à six impulsions.

9. Procédé suivant l'une des revendications précédentes,
**caractérisé en ce que**
le redresseur (4) à diodes et le convertisseur (6) pouvant être commandé sont montés en série de leur côté (8) de tension continue.

10. Procédé suivant l'une des revendications précédentes,
**caractérisé en ce que**
l'on produit, à partir d'une tension continue du réseau (20) de courant continu, à l'aide de l'unité (2 ; 52 ; 64) de convertisseur, une tension alternative que l'on injecte dans le réseau (24) de courant alternatif, la tension alternative étant produite par le convertisseur (6) pouvant être commandé et la tension alternative étant réglée par le convertisseur (6) pouvant être commandé, de manière à modifier un rapport d'une grandeur caractéristique de la tension alternative à une grandeur caractéristique de la tension continue.
